# EUROPEAN PATENT APPLICATION

(11) **EP 1 600 860 A2**
(43) Date of publication of application: **30.11.2005**
(21) Application number: 05103913.9
(22) Date of filing: 11.05.2005
(51) Int. Cl.: G06F 17/22, G06F 17/24

(54) **Method and system for embedding context information in a document**

(30) Priority: 28.05.2004 US 575548; 14.07.2004 US 891093
(71) Applicant: MICROSOFT CORPORATION, Redmond, Washington 98052-6399 (US)
(72) Inventor: Dalfo, Ricard Roma, Redmond, WA 98052 (US)
(74) Representative: Zimmer, Franz-Josef

(57) **Abstract**

A generic SmartTag module has a generic recognizer and a generic action handler. The generic module is provided for a platform with access to a repository having SmartTag configuration information and recognizers and action handlers for each host application residing in the platform. The repository may be a shared datastore available to many platforms. The generic module can dynamically load and unload selected recognizers and action handlers from the repository at run-time. The generic module can handle the registrations with the host applications and implement the SmartTags interfaces. The generic module can determine a context of the document and load recognizers and action handlers from the repository based on the determined context. The generic module can evaluate expressions (e.g., regular .NET expressions) and perform searches in the document for data that is stored in a data source.

## Description

### CLAIM OF PRIORITY

This application claims the benefit of U.S. Provisional Application No. 60/575,548, filed May 28, 2004.

### FIELD

Various embodiments described below relate generally to generation and processing of electronic documents, and more particularly but not exclusively to the addition and processing of contextual information in such documents.

### BACKGROUND

In many real-world scenarios, users would like to easily access additional information about a person, corporation, address, etc. that appears in a document (e.g., a text document, spreadsheet, email, etc.). SmartTag technology developed by Microsoft Corporation, Redmond, Washington provides a mechanism to add and access such contextual information to documents. FIGS 1A through 1C illustrate an example of SmartTag technology adding contextual information to a portion of a text document.

FIG. 1A shows an address 100 "One Microsoft Way, Redmond, Washington 98052" that appears in a text document. A dashed line 102 positioned below address 100 indicates that this portion of the text document has a SmartTag (i.e., contextual information associated with the portion of text). The SmartTag technology includes a recognizer that examines the document for preselected strings for which sets of associated contextual information are available. The contextual information is stored in a dynamically linked library (DLL) or other datastore. The recognizer then attaches this contextual information to the recognized string.

FIG. 1B shows an "option" button 110 that the SmartTag technology displays when the user places the cursor over dashed line 102. The SmartTag technology also displays an additional graphic 112 that indicates that option button 110 is used to display a menu of SmartTag actions. The SmartTag technology includes an action handler that processes the contextual information associated with the recognized string to provide actions that the user can take with regard to the recognized string.

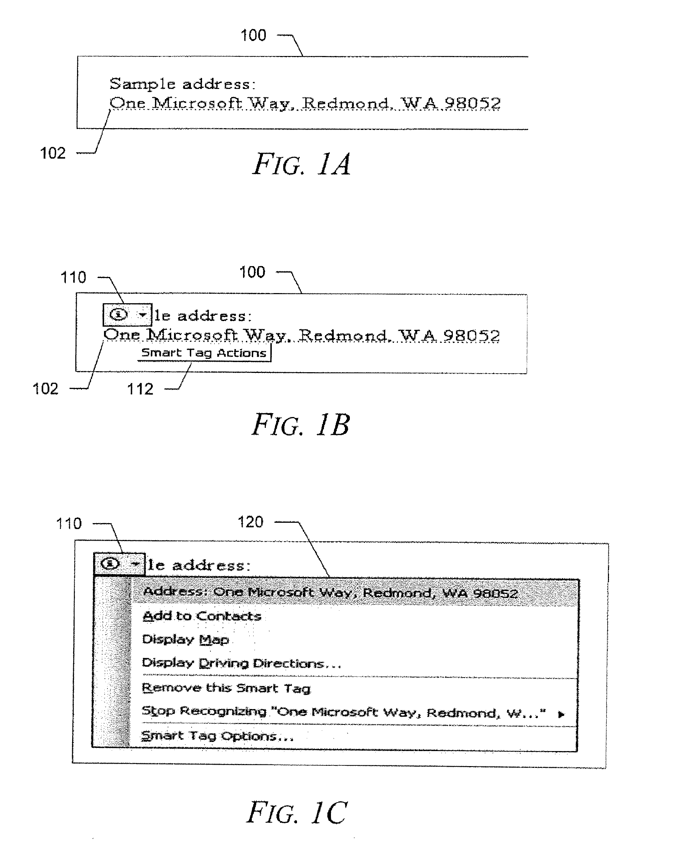

FIG. 1C shows a menu 120 displayed when the user activates option button 110. Menu 120 shows various actions that the user may take with regard to address 100. The action handler displays menu 120 and performs action(s) when selected by the user.

Although this example illustrates SmartTags based on a recognized string of a text document, SmartTags can also be based on other types of data besides text strings and/or in other types of documents or files. Other SmartTags may be provided to recognized other types of data (e.g., names of people, corporations, products, dates, places, etc.), each associated with different contextual information and actions (start an email addressed to the person, view the person's calendar, display a telephone number for the corporation, display invoices sent to the corporation, display service requests made for the product, etc.) that can be performed. This simple example shows how powerful and useful SmartTag technology can be to a user.

Currently, SmartTags are implemented on an application-by-application basis. That is, the user must have recognizers and action handlers registered for each SmartTag-capable application so that when the application is opened, the recognizers and action handlers will be instantiated. For a large organization, deploying recognizers and action handlers and registering them for each application may be significant task. Maintaining (e.g., updating and deleting existing recognizers and action handlers; adding new recognizers and action handlers) SmartTags can also be a formidable task for a large organization.

Further, the recognizers would apply to all types of documents written using that application even though the recognizer may recognize data that is not useful for some types of documents (e.g., recognizing names of your client's products in a letter to personal friend). Still further, developers writing SmartTags must implement interfaces for the recognizers and action handlers, which tends to increase cost and complexity for the developer.

### SUMMARY

According to aspects of the various embodiments, a generic SmartTag system is provided. In one aspect, a generic SmartTag module (which includes a generic recognizer and a generic action handler) is provided for a computing platform with access to a repository that includes SmartTag configuration information and recognizers and action handlers for each SmartTag-capable application residing in the platform. The repository may be a shared datastore available to many computing platforms. The generic SmartTag module can dynamically load and unload selected recognizers and action handlers from the repository at run-time. The shared repository advantageously simplifies maintenance of recognizers and action handlers.

In another aspect, the generic SmartTag module handles all registrations with the SmartTag-capable applications and implements all of the interfaces (e.g., component object model or COM interfaces) required for the SmartTags to operate. This aspect greatly reduces complexity for developers writing SmartTags.

In still another aspect, the generic SmartTag module determines a context of the document and loads recognizers and action handlers from the repository based on the determined context. When no context can be determined, the generic SmartTag module may load a default set of recognizers and action handlers. This aspect allows the computing platform to have a set of recognizers and action handlers tailored to the context of the document to avoid recognizing irrelevant pieces of data in the document.

In yet another aspect, the generic SmartTag module itself can evaluate expressions. This aspect reduces complexity for developers because the developer need only specify the expression in the repository, without having to write code that evaluates the expression. In a related aspect, the generic SmartTag module itself can perform searches in the document for data that is stored in a data source. This related aspect reduces complexity for developers because the developer need only specify the location of the data source, without having to write code that performs the search.

### BRIEF DESCRIPTION OF THE DRAWINGS

Non-limiting and non-exhaustive embodiments are described with reference to the following figures, wherein like reference numerals refer to like parts throughout the various views unless otherwise specified.

FIGS. 1A-1C are diagrams illustrating how SmartTags present contextual information for selected pieces of data in a document.

FIG. 2 is a functional block diagram illustrating a system for loading recognizers and action handlers into a local machine from a repository, according to one embodiment.

FIG. 3 is a flow diagram generally illustrating operational flow of a generic SmartTag module in dynamically loading and calling recognizers and action handlers, according to one embodiment.

FIG. 4 is a flow diagram generally illustrating a process for deploying portions of a generic SmartTag system, according to one embodiment.

FIG. 5 is a functional block diagram generally showing an illustrative computing environment in which various embodiments of the techniques and mechanisms described herein may be implemented.

### DETAILED DESCRIPTION

The following techniques and mechanisms are directed to implementing a method and system for embedding context information in a document. Generally stated, a generic module is provided for one or more local machines. Each generic module can access a repository that contains recognizers and action handlers that can be dynamically loaded by the local machine when a document is opened. The repository can reside in a remote machine (or distributed across multiple remote machines) and shared by the local machines. In one embodiment, the system is based on Smart Tag technology available from Microsoft Corporation. Specific implementations of this general concept are described below.

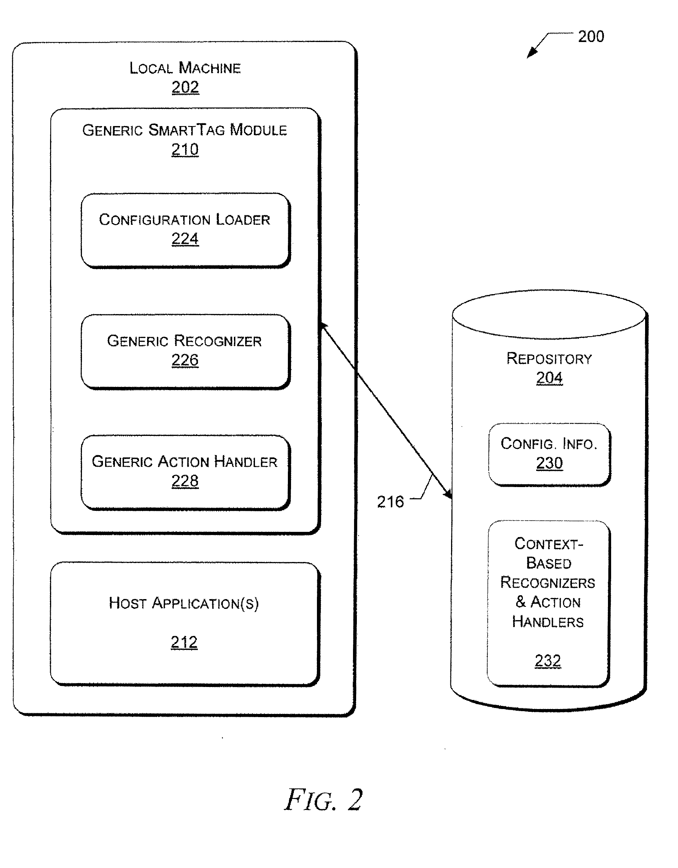

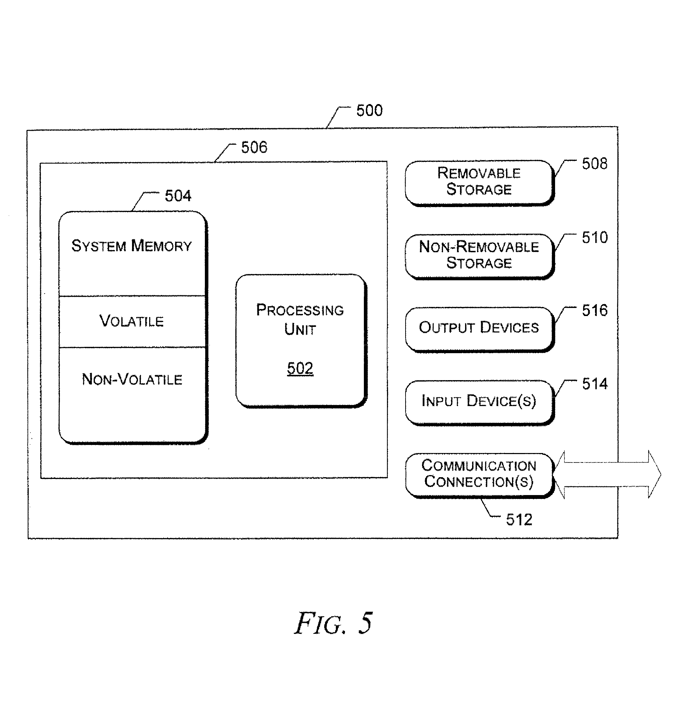

FIG. 2 is a functional block diagram illustrating a system 200 for the aforementioned loading recognizers and action handlers into a local machine 202 from a repository 204, according to one embodiment. The embodiment is based on SmartTag technology, although other embodiments may embed context information in documents using other technologies. In this embodiment, local machine 202 includes generic SmartTag module 210 and one or more SmartTag-capable applications 212. SmartTag-capable applications are also referred to herein as host applications. Generic SmartTag module 210 is a software component in this embodiment, to be executed in a computing environment (not shown) implemented on local machine 202. An exemplary computing environment is described in conjunction with FIG. 5 below. In system 200, generic SmartTag module 210 and repository 204 can exchange information as indicated by an arrow 216.

Further, in this embodiment, generic SmartTag module 210 includes a configuration loader 224 to load configuration information from repository 204, a generic recognizer 226 to perform calls to recognizers loaded from repository 204, and a generic action handler 228 to perform calls to action handlers loaded from repository 204. In some embodiments, generic action handler 228 also performs expression evaluation (e.g., expressions according to the .NET framework, developed by Microsoft). Although this example depicts generic SmartTag module 210 as having several "sub-modules", in other embodiments, the functionality of these sub-modules may be distributed into fewer (or more) sub-modules and in different combinations.

Repository 204 includes SmartTag configuration information 230, and recognizers and action handlers 232, in this embodiment. SmartTag configuration information 230 contains information related to the location of each recognizer and action handler of recognizers and action handlers 232. For example, the configuration information can include a set of pointers, with a pointer to each of the recognizers and action handlers. In one embodiment, SmartTag configuration information 230 is in the form of metadata, but in other embodiments, the configuration information may be contained in a file, document, or other suitable form. Although depicted in FIG. 2 as a single device, repository 204 can be distributed over several devices that are accessible by local machine 202. For example, SmartTag configuration information 230 may be stored in one device, while recognizers and action handlers 232 are stored in another device, while still being represented by a single logical location. Because the recognizers and action handlers are stored in a single logical location, deployment and maintenance of the recognizers and action handlers can be significantly less complex and less time-consuming.

In some embodiments, recognizers and action handlers 232 include context-specific recognizers and action handlers. Recognizers and action handlers 232 can also include a standard set of recognizers and action handlers that are used for every host application and, therefore are not necessarily associated with a specific context.

In some embodiments, the "context" of a document refers to the purpose and use of the document. Examples of a document's context can include the host application used to create the document, a style sheet used in creating a document, properties of the document, etc. For example, a legal document (e.g., a contract) can have a context that is very different from a scientific document. A recognizer for use with documents having a "legal" context can be adapted to recognize legal terms while ignoring scientific terms; a recognizer for use for scientific document can be adapted to recognize scientific terms while ignoring legal terms. Developers can then create recognizers and/or action handlers for each context of a document to be stored in repository 204. Although the above embodiment uses SmartTag technology, other embodiments may embed context information in documents using other technologies.

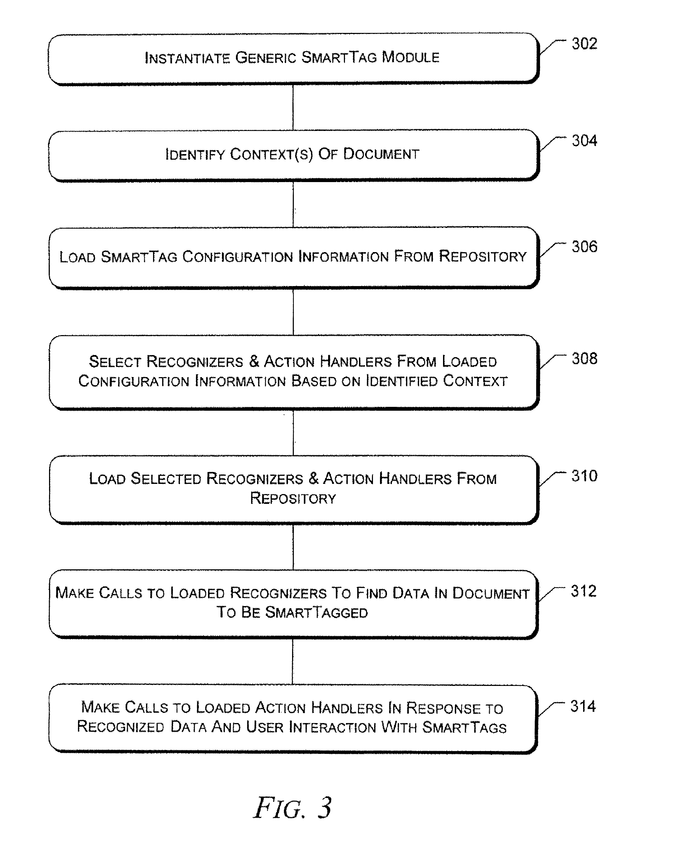

FIG. 3 generally illustrates operational flow of generic SmartTag module 210 (FIG. 2) in dynamically loading and calling recognizers and action handlers, according to one embodiment. Referring to FIGS. 2 and 3, this example of operational flow of generic SmartTag module 210 begins when a user of local machine 222 opens or creates a document using a host application.

In a block 302, generic SmartTag module 210 is instantiated. In this embodiment, in response to opening the document, local machine 202 opens the host application, which in turn loads generic SmartTag module 210 into memory because generic SmartTag module 210 is registered with the host application (e.g., when generic SmartTag module 210 was installed in local machine 202).

In a block 304, one or more contexts are identified for the document. In this embodiment, configuration loader 224 of generic SmartTag module 210 is configured to determine the context(s) of the document, for example, by examining one or more of: the properties of the document; a style sheet for the document; the host application used to create the document; a schema attached to the document; or any other relevant information contained in the document. Contexts and the mechanism(s) to identify them are typically created by the developers of the host applications, although in some scenarios, third party developers may extend the contexts. The developers also create the corresponding context-specific recognizers and action handlers that are stored in repository 204. Some documents may not have any identifiable context.

In a block 306, SmartTag configuration information 230 is obtained from repository 204 and loaded into local machine 202. In this embodiment, configuration loader 224 sends a request for SmartTag configuration information 230 to repository 204 and, in response, receives SmartTag configuration information 230 from repository 204.

In a block 308, one or more recognizers and one or more action handlers are obtained from repository 204 and loaded into local machine 202. In this embodiment, configuration loader 224 selects one or more recognizers and action handlers of those contained in SmartTag configuration information 230 based on the document's context as identified in block 304. When no context was identified in block 304, then configuration loader 224 can select a default set of recognizers and action handlers. The deployer and/or administrator can define and modify this default set.

In a block 310, the recognizer(s) and action handler(s) selected in block 308 are then obtained from repository 204 and loaded into local machine 202. In this embodiment, configuration loader 224 sends requests (which include the location information of the selected recognizers and action handlers obtained from SmartTag configuration information 230) for the selected SmartTag processing modules (e.g., recognizers and action handlers) to repository 204. In response to these requests, configuration loader 224 will receive the selected processing modules from repository 204. In this way, context-specific recognizers and action handlers can be dynamically loaded (and unloaded when no longer needed) at run-time, thereby improving the user's experience by providing relevant SmartTags and reducing the number of irrelevant SmartTags.

One or more of the selected processing modules can be in the form of DLLs written by developers, which the deployer and/or administrator would store in repository 204. In some embodiments, processing modules may also be in a form representing a regular expression (e.g., an expression according to the previously mentioned .NET framework). In other embodiments, expressions from different frameworks or languages can be used or created. The expression, when evaluated, identifies patterns or strings in pieces of text. A smart tag is created with the definition that is provided by the configuration on the selected text. In some other embodiments, processing modules may also be in a form representing a data source or a location of a data source. The data source can contain a list of strings or pieces of data for which the developer has created SmartTags. A data source may be, for example, in the form of a database, spreadsheet, list file, XML document, etc.

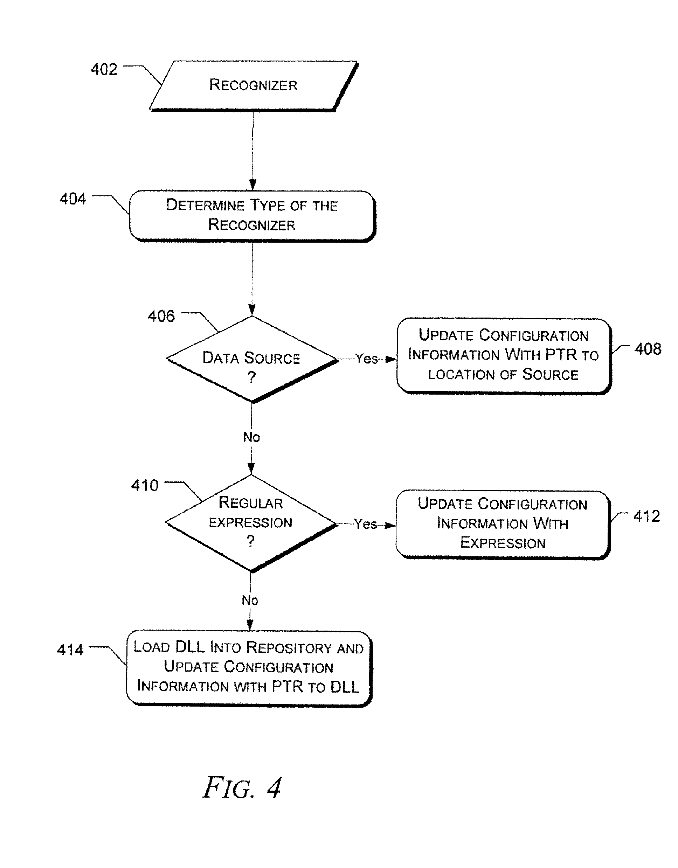

In a block 312, recognition operations are performed on the document using the recognizers loaded in block 310. In this embodiment, generic recognizer 226 selects pieces of data from the document and, for each piece of data, makes calls to the loaded recognizers to determine if there are SmartTags associated with this piece of data. This embodiment allows the developer to simplify the implementation of a loaded recognizer because each recognizer only needs to implement one method call (e.g., the .Recognize2(...) method call of the ISmartTagRecognizer2 interface). Generic recognizer 226 then takes care of all of the other interfaces needed to support the SmartTag implementation. An example of this feature is described below in conjunction with FIG. 4 for an expression recognizer.

In a block 314, action handling operations are performed on the document using action handlers loaded in block 310. In this embodiment, the recognizer recognizes the text and inserts a SmartTag. When the SmartTag is used by the user, generic action handler 228 gets triggered and generic SmartTag module 210 routes that execution to the correct action handler that was dynamically loaded in block 310. Blocks 312 and 314 can then be repeatedly performed for pieces of data from other portions of the document until the entire document has been processed.

In an alternative embodiment, generic SmartTag module 210 (FIG. 2) need not load the data source content while performing block 310. Rather, generic recognizer 226 (FIG. 2) can load the data source content while performing block 312.

Although the above processes are illustrated and described sequentially, in other embodiments, the operations described in the blocks may be performed in different orders, multiple times, and/or in parallel. Further, although the above embodiment uses SmartTag technology, other embodiments may embed context information in documents using other technologies.

FIG. 4 illustrates a process for deploying portions of generic SmartTag system 200 (FIG. 2), according to one embodiment. This example is directed toward an administrator or deployer deploying a new recognizer 402 for a registered host application. For new applications, the deployer or administrator would need to create the necessary registry entries for these registrations. This can be performed via a script when the user logs on, for example.

New recognizer 402 was created by a developer of the host application. If for example, the developer created a new recognizer, in an embodiment adapted for the SmartTag interface2 release (e.g., see the SmartTag Software Developer Kit (SDK) available from Microsoft), the recognizer only needs to provide an implementation for the .Recagnize2(...) method call. A sample implementation of a regular .NET expression to recognize an identifier of a known software bug (i.e., a bug number) is provided below. The action handler corresponding to the recognizer would then get a SmartTag containing information specific to the recognized bug number.

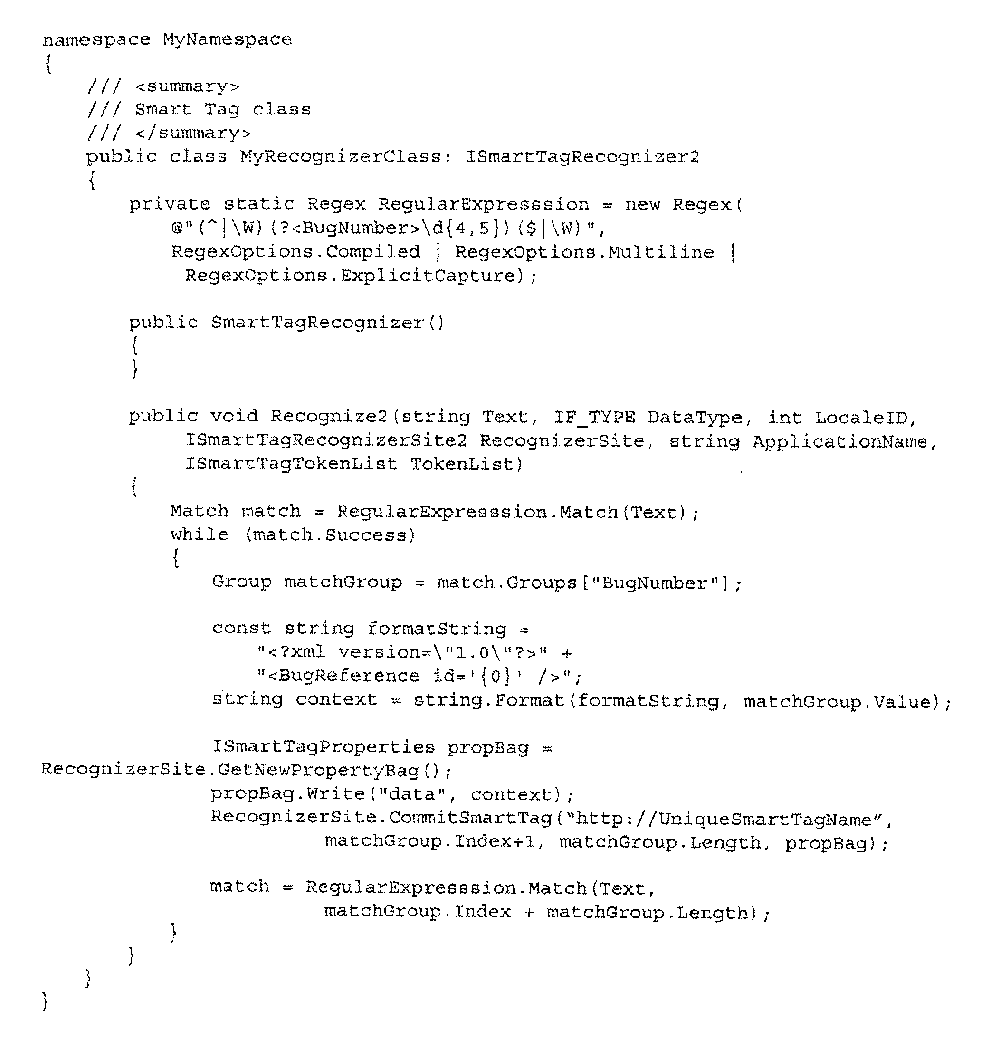

In a block 404, the type of the recognizer is determined. In this embodiment, there are three types of recognizers (namely DLL, regular expression and data source), although there can be a different number of types in other embodiments. In this embodiment, action handlers are DLLs.

In a decision block 406, it is determined whether recognizer 402 is a data source type. In this embodiment, the deployer or administrator makes this determination. If recognizer 402 is a data source type, then the operational flow proceeds to a block 408.

In block 408, the deployer or administrator only needs to store a copy of the data source of recognizer 402 in repository 204 (FIG. 2) and enter a pointer to the location of the stored data source (or other mechanism for identifying the location of the stored data source) in SmartTag configuration information 230 (FIG. 2). If in block 406 it is determined that recognizer 402 is not a data source, the operational flow proceeds to a block 410.

In decision block 410, it is determined whether recognizer 402 is a regular expression. In this embodiment, the deployer or administrator makes this determination. If recognizer 402 is a regular expression type, then the operational flow proceeds to a block 412.

In block 412, the deployer or administrator only needs to store data representing the regular expression in SmartTag configuration information 230 (FIG. 2). An example for the previously-described bug number expression is provided below:

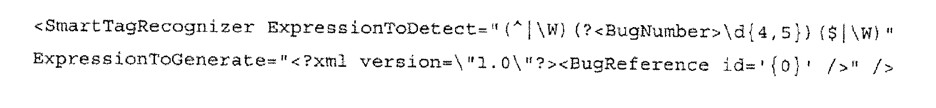

In this embodiment, generic SmartTag module 210 (FIG. 2) has all of the information needed for this recognizer directly from SmartTag configuration information 230 rather than having to get the expression from repository 204 in a separate operation. In this embodiment, if it is determined in block 410 that recognizer 402 is not a regular expression, then recognizer 402 is a DLL type, and the operational flow proceeds to a block 424.

In block 414, the deployer or administrator needs to store a copy of the DLL of recognizer 402 in repository 204 (FIG. 2) and add a pointer to the location where the DLL is stored (or other mechanism to identify the location of the DLL) into SmartTag configuration information 230 (FIG. 2). An example for adding the location information into SmartTag configuration information 230 is provided below:

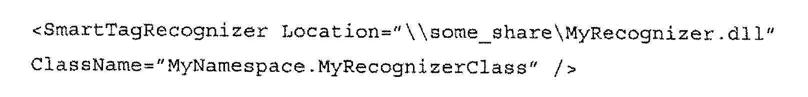

For deploying action handlers, the deployer or administrator would perform operations substantially similar to those of block 414 to store action handler DLLs in repository 204 and add a pointer to the DLL into SmartTag configuration information 230 (FIG. 2).

Although the above processes are illustrated and described sequentially, in other embodiments, the operations described in the blocks may be performed in different orders, multiple times, and/or in parallel. Further, although the above embodiment uses SmartTag technology, other embodiments may embed context information in documents using other technologies.

### Illustrative Operating Environment

The various embodiments described above may be implemented in computer environments of the server and clients. An example computer environment suitable for use in the server and clients is described below in conjunction with FIG. 5.

With reference to FIG. 5, an exemplary system for implementing the invention includes a computing device, such as computing device 500. In its most basic configuration, computing device 500 typically includes at least one processing unit 502 and memory 504. Depending on the exact configuration and type of computing device, memory 504 may be volatile (such as RAM), non-volatile (such as ROM, flash memory, etc.) or some combination of the two. This most basic configuration is illustrated in Figure 5 by dashed line 506. Additionally, device 500 may also have additional features/functionality. For example, device 500 may also include additional storage (removable and/or non-removable) including, but not limited to, magnetic or optical disks or tape. Such additional storage is illustrated in Figure 5 by removable storage 508 and non-removable storage 510. Computer storage media includes volatile and nonvolatile, removable and non-removable media implemented in any method or technology for storage of information such as computer readable instructions, data structures, program modules or other data. Memory 504, removable storage 508 and non-removable storage 510 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by device 500. Any such computer storage media may be part of device 500.

Device 500 may also contain communications connection(s) 512 that allow the device to communicate with other devices. Communications connection(s) 512 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

Device 500 may also have input device(s) 514 such as keyboard, mouse, pen, voice input device, touch input device, etc. Output device(s) 516 such as a display, speakers, printer, etc. may also be included. All these devices are well know in the art and need not be discussed at length here.

Device 500 may include a variety of computer readable media. Computer readable media can be any available media that can be accessed by device 500 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by device 500. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

Various modules and techniques may be described herein in the general context of computer-executable instructions, such as program modules, executed by one or more computers or other devices. Generally, program modules include routines, programs, objects, components, data structures, etc. for performing particular tasks or implement particular abstract data types. These program modules and the like may be executed as native code or may be downloaded and executed, such as in a virtual machine or other just-in-time compilation execution environment. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. As a non-limiting example only, communication media includes wired media such as a wired network or direct-wired connection, and wireless media such as acoustic, RF, infrared, and other wireless media. Combinations of any of the above are also included within the scope of computer readable media.

Reference has been made throughout this specification to "one embodiment," "an embodiment," or "an example embodiment" meaning that a particular described feature, structure, or characteristic is included in at least one embodiment of the present invention. Thus, usage of such phrases may refer to more than just one embodiment. Furthermore, the described features, structures, or characteristics may be combined in any suitable manner in one or more embodiments.

One skilled in the relevant art may recognize, however, that the invention may be practiced without one or more of the specific details, or with other methods, resources, materials, etc. In other instances, well known structures, resources, or operations have not been shown or described in detail merely to avoid obscuring aspects of the invention.

While example embodiments and applications have been illustrated and described, it is to be understood that the invention is not limited to the precise configuration and resources described above. Various modifications, changes, and variations apparent to those skilled in the art may be made in the arrangement, operation, and details of the methods and systems of the present invention disclosed herein without departing from the scope of the claimed invention.

## Claims

1. A method to add contextual information to document, comprising:
determining a context of a document;
loading configuration information associated with the contextual information from a repository; and
loading processing modules from the repository in response to the context and the configuration information, wherein the processing modules are to add contextual information to the document when activated.

2. The method of claim 1, wherein loading configuration information from a repository comprises loading configuration information from a repository that is remote from a location to which the configuration information is loaded.

3. The method of claim 1, wherein loading configuration information from a repository comprises loading a pointer to a dynamically linked library (DLL).

4. The method of claim 1, wherein loading configuration information from a repository comprises loading a data source comprising the configuration information.

5. The method of claim 1, wherein loading configuration information from a repository comprises loading an expression comprising the configuration information.

6. The method of claim 1, wherein loading configuration information from a repository comprises loading default configuration information if no context can be determined.

7. The method of claim 1, wherein the configuration information includes information that applies to multiple contexts.

8. The method of claim 1, wherein the repository can be accessed by multiple entities.

9. The method of claim 1, further comprising unloading the loaded configuration information.

10. The method of claim 1, further comprising unloading the loaded processing modules.

11. The method of claim 1, further comprising making a call to a processing module to recognize selected pieces of data in a document.

12. The method of claim 11, further comprising making a call to another processing module in response to a recognized piece of data.

13. The method of claim 1, wherein the context of a document comprises a property of the document

14. The method of claim 1, wherein the context of a document comprises a style sheet associated with the document.

15. The method of claim 1, wherein the context of a document comprises a schema attached to the document.

16. The method of claim 1, wherein the context of a document comprises a host application used to create the document.

17. A machine readable medium having instructions for performing the method of claim 1.

18. An apparatus to add contextual information to a document, the apparatus comprising:
means for determining a context of the document;
means for loading configuration information associated with the contextual information from a repository; and
means for loading processing modules from the repository in response to the context and the configuration information, wherein the processing modules are to add contextual information to the document when activated.

19. The apparatus of claim 18, wherein the repository is remotely located from the apparatus.

20. The apparatus of claim 18, wherein the configuration information comprises one or more of a pointer to a dynamically linked library (DLL), a data source, and an expression.

21. The apparatus of claim 18, wherein the means for loading configuration information loads default configuration information in response to the means for determining cannot determine a context of the document.

22. The apparatus of claim 18, further comprising means for unloading loaded configuration information, and means for unloading loaded processing modules.

23. The apparatus of claim 18, further comprising means for making a call to a processing module to recognize selected pieces of data in the document.

24. The apparatus of claim 23, further comprising means for making a call to another processing module in response to a recognized piece of data.

25. A system to add contextual information to a document, the system comprising:
a first recognizer to make a call to a loaded second recognizer to recognize a selected piece of data in the document;
a first action handler to make calls to a loaded second action handler in response to a piece of data recognized by the first recognizer; and
a configuration loader to determine a context of the document and, in response, load configuration information associated with the contextual information from a repository.

26. The system of claim 25, wherein the configuration loader is to load the second recognizer and action handler in response to the loaded configuration information.

27. The system of claim 25, wherein the configuration loader is further to load a plurality of recognizers and a plurality of action handlers in response to the loaded configuration information.

28. The system of claim 25, wherein the system is registered with a host application used to create the document when the system was installed in a machine.

29. The system of claim 25, wherein the second recognizer need not be registered with a host application used to create the document.

30. The system of claim 25, wherein the configuration information comprises one or more of a pointer to a dynamically linked library, a data source, and an expression.

31. The system of claim 25, wherein the repository resides in a machine other than a machine in which the system resides.

32. The system of claim 25, wherein the repository is accessible to other systems residing in machines other than a machine in which the system resides.

33. A machine readable medium having components implementing the system as recited in claim 25.
